# EUROPEAN PATENT APPLICATION

(11) **EP 2 749 997 A1**
(43) Date of publication of application: **02.07.2014**
(21) Application number: 12826391.0
(22) Date of filing: 02.07.2012
(51) Int. Cl.: G06F 3/041, G06F 1/32, G09G 5/00, H04M 1/247, H04M 1/73

(54) **STATE CONTROL DEVICE, STATE CONTROL METHOD AND PROGRAM**

(30) Priority: 22.08.2011 JP 2011180333
(71) Applicant: NEC CASIO Mobile Communications, Ltd., Kawasaki-shi Kanagawa 211-8666 (JP)
(72) Inventor: KANAI, Kazuya, Kodama-gun Saitama 367-0297 (JP)
(74) Representative: Vossius & Partner
(86) International application number: PCT/JP2012/004268
(87) International publication number: WO 2013/027319

(57) **Abstract**

[**PROBLEM TO BE SOLVED**] A state control device is achieved which makes a return from a power saving state to a normal operating state with an extremely simple operation without wastefully consuming power.

[**SOLUTION**] In a power saving state where the functions of an LCD unit 12 (including a backlight) and a touch panel unit 13 are disabled, when a function-enabled acceleration sensor unit 14 detects a shake (motion) of a portable terminal 100, the function of the touch panel unit 13 is enabled. When the enabled touch panel unit 13 detects a touch operation, a transition is made to a normal operating state where the LCD unit 12 (including a backlight) is set ON for screen display. As a result, it is not required to press a power supply button provided at a position difficult to operate in view of prevention of an erroneous operation as in the conventional technology, and a return can be made from the power saving state to the normal operating state with an extremely simple operation without wastefully consuming power.

## Description

### TECHNICAL FIELD

The present invention relates to a state control device, state control method and program suitable for use in an electronic device, such as a portable terminal including a touch panel as an operation input device.

### BACKGROUND ART

In an electronic device such as a portable terminal including a touch panel as an operation input device, it is often the case where, after a non-operation state continues for a predetermined period, a screen display (backlight) is turned off and a transition is made to a power saving state where a touch panel function is disabled. Powers saving technologies of this type are disclosed in, for example, Patent Document 1 and Patent Document 2.

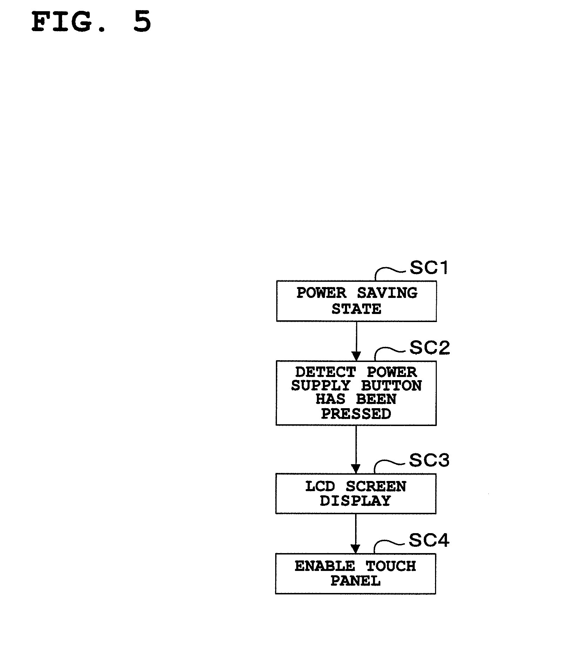

Conventionally, to make a return from the power saving state to a normal operating state, as depicted in a flowchart of FIG. 5, a screen display (backlight) is turned off to suppress power consumption after a non-operation state continues for a predetermined period. Also, in the power saving state where the touch panel is disabled (Step SC1), when a user pressing a power supply button is detected (Step SC2), the procedure proceeds to Step SC3, where LCD screen display is performed (backlight is illuminated). At the subsequent Step SC4, the touch panel function is enabled.

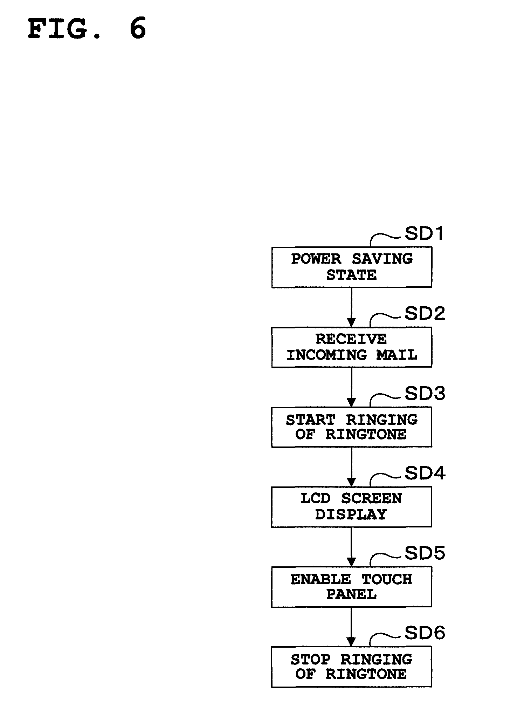

Also, at the time of receiving an incoming mail, as depicted in a flowchart of FIG. 6, a screen display (backlight) is turned off to suppress power consumption. Also, in the power saving state where the touch panel is disabled (Step SD1), when an incoming mail is received (Step SD2), ringing of a ringtone is started (Step SD3), and then the procedure proceeds to Step SD4, where LCD screen display is performed (backlight is illuminated). At the subsequent Step SD5, the touch panel function is enabled, and then the ringing of the ringtone is stopped (Step SD6) to make a transition to the normal operating state.

### PRIOR ART DOCUMENTS

### PATENT DOCUMENTS

Patent Document 1: JP 2006-073023
Patent Document 2: JP 2009-211451

### SUMMARY OF INVENTION

### Problem to be Solved by the Invention

Meanwhile, in many portable terminals including multi-functional portable phones called smartphones, a touch panel is mounted on an operation input device, and only a power supply button for turning a power supply on and off is provided as a physically operating button. In these portable terminals, if the state becomes a power saving state, the touch panel function is disabled and therefore a touch detection cannot be made. Thus, to make a return to a normal operating state, it is required to press the power supply button. The power supply button is often placed at a position difficult to operate in view of preventing an erroneous operation, thereby posing a harmful effect that it is difficult to perform an operation of returning from the power saving state.

Moreover, as depicted in FIG. 6, when an incoming mail is received, LCD screen display is performed (backlight is illuminated), the touch panel function is enabled, and then a transition is made to the normal operating state. Therefore, for example, if the portable terminal is in a pocket or bag of the user, LCD screen display is performed (backlight is illuminated) although the user is not watching the display, thereby also posing a harmful effect that power is wastefully consumed. That is, in other words, there is a problem in which it is not possible to make a return from the power saving state to the normal operating state with an extremely simple operation without wastefully consuming power.

The present invention was made in view of these circumstances, and has an object of providing a state control device, state control method, and program capable of making a return from a power saving state to a normal operating state with an extremely simple operation without wastefully consuming power.

### Means for Solving the Problem

To achieve the object described above, in the state control device of the present invention, a state control device comprising:
motion detecting means which detects a motion of a casing;
motion detection enabling means which enables the motion detecting means in a power saving state where a screen display function and a touch panel function are disabled;
touch panel enabling means which enables the touch panel function for a predetermined period when a motion of the casing is detected by the motion detecting means enabled by the motion detection enabling means; and
screen display enabling means which enables the screen display function when a touch operation is detected during a touch detection period in which the touch panel function is enabled by the touch panel enabling means for the predetermined period.

Also, in the state control method of the present invention, a state control method comprising:
a motion detecting step of detecting a motion of a casing;
a motion detection enabling step of enabling the motion detecting step in a power saving state where a screen display function and a touch panel function are disabled;
a touch panel enabling step of enabling the touch panel function for a predetermined period when a motion of the casing is detected in the motion detecting step enabled by the motion detection enabling step; and
a screen display enabling step of enabling the screen display function when a touch operation is detected during a touch detection period in which the touch panel function is enabled by the touch panel enabling step for the predetermined period.

Furthermore, in the program of the present invention, a program causing a computer mounted on an electronic device to perform steps comprising:
a motion detecting step of detecting a motion of a casing;
a motion detection enabling step of enabling the motion detecting step in a power saving state where a screen display function and a touch panel function are disabled;
a touch panel enabling step of enabling the touch panel function for a predetermined period when a motion of the casing is detected in the motion detecting step enabled by the motion detection enabling step; and
a screen display enabling step of enabling the screen display function when a touch operation is detected during a touch detection period in which the touch panel function is enabled by the touch panel enabling step for the predetermined period.

### Effect of the Invention

In the present invention, a return can be made from a power saving state to a normal operating state with an extremely simple operation without wastefully consuming power.

### BRIEF DESCRIPTION OF DRAWINGS

FIG. 1 is an external view depicting an outer appearance of a portable terminal 100 including a state control device according to a first embodiment.
FIG. 2 is a block diagram depicting the structure of the state control device according to the first embodiment.
FIG. 3 is a flowchart depicting the operation of the state control device according to the first embodiment.
FIG. 4 is a flowchart depicting the operation of the state control device according to a second embodiment.
FIG. 5 is a flowchart depicting an example of operation of returning from a power saving state to a normal operating state.
FIG. 6 is a flowchart depicting an example of operation of returning from the power saving state to the normal operating state at the time of receiving an incoming mail.

### DESCRIPTION OF EMBODIMENTS

Embodiments of the present invention are described below with reference to the drawings.

### [First Embodiment]

### (1) Outer Appearance

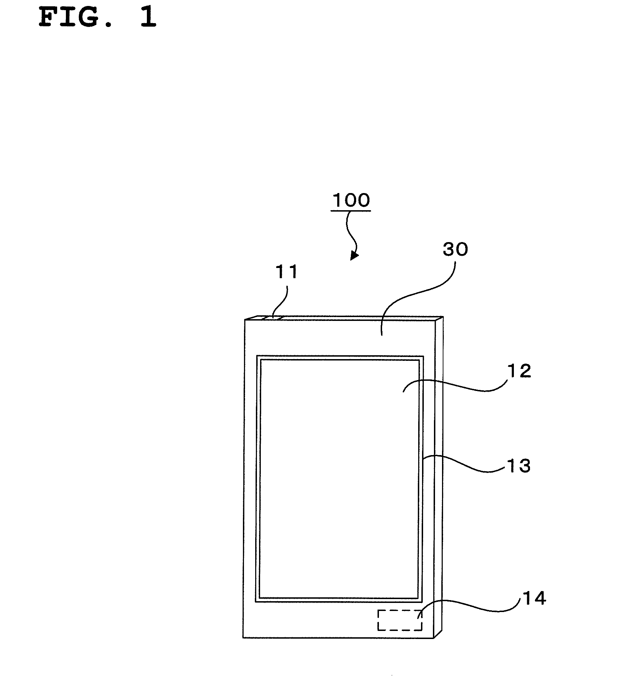

FIG. 1 is an external view depicting an outer appearance of a portable terminal 100 including a state control device according to a first embodiment. The portable terminal 100 depicted in the drawing has a casing structure formed in an approximately rectangular plate, with its upper end provided with a power supply button unit 11 for turning a power supply on and off. By providing the power supply button unit 11 at the upper end of the casing which is difficult to operate, an erroneous user operation is prevented. The portable terminal 100 has a casing main surface 30 provided with an LCD unit 12 for screen display and a touch panel unit 13 for detecting a touch operation to be performed on the LCD unit 12. In the portable terminal 100, an acceleration sensor unit 14 for detecting a shake (motion) of the casing is incorporated in a lower portion of the casing.

### (2) Structure

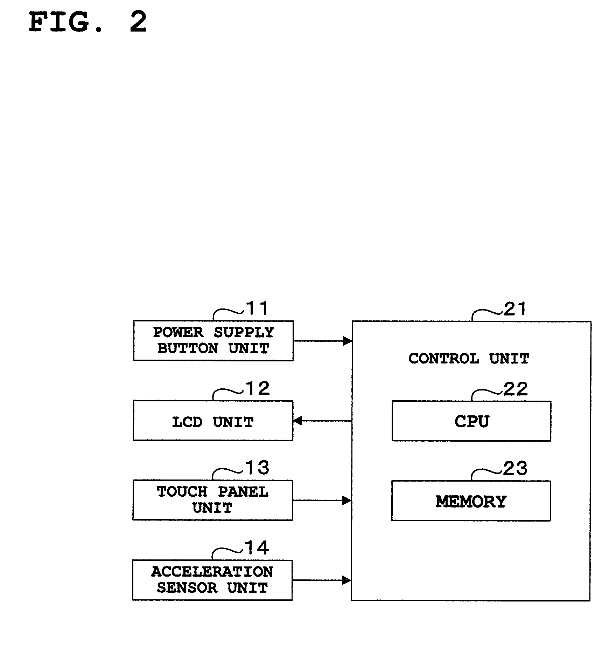

FIG. 2 is a block diagram depicting the structure of the state control device according to the first embodiment. The state control device to be mounted on the portable terminal 100 is configured of the power supply button unit 11 described above, the LCD unit 12, the touch panel unit 13, the acceleration sensor unit 14, and a control unit 21. The control unit 21 includes a memory 23 storing a program for state control processing, which will be described further below, and a CPU 22 for executing the program for the state control processing stored in the memory 23. The operation of the state control processing to be performed by the control unit 21 will be described below.

### (3) Operation

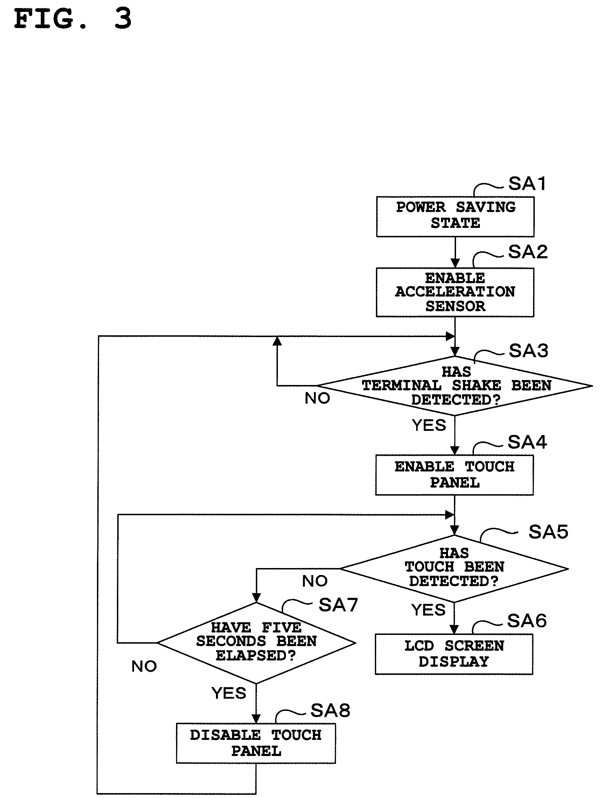

Next, the operation of the state control processing to be performed by the control unit 21 of the above-structured state control device is described with reference to FIG. 3. When the LCD unit 12 (including a backlight) is turned off after a non-operation state continues for a predetermined period and the state becomes a power saving state where the function of the touch panel unit 13 is disabled (Step SA1), the procedure proceeds to Step SA2, where the function of the acceleration sensor unit 14 is enabled. Subsequently, at Step SA3, the presence or absence of a shake (motion) of the casing of the portable terminal 100 is detected based on an output from the function-enabled acceleration sensor unit 14. For example, it is assumed that a user takes the portable terminal 100 from out of a bag and a shake (motion) occurring at that time is detected. Then, the determination result at Step SA3 described above is "YES", and the procedure proceeds to Step SA4, where the function of the touch panel unit 13 is enabled.

Then, when the function of the touch panel unit 13 is enabled, the procedure proceeds to Step SA5, where it is determined whether the touch panel unit 13 has detected a touch operation. If a touch operation has been detected, the determination result is "YES", and the procedure proceeds to Step SA6, where a transition is made to a normal operating state where the LCD unit 12 (including the backlight) is set ON for screen display.

On the other hand, if a touch operation has not been detected, the determination result at Step SA5 described above is "NO", and the procedure proceeds to Step SA7. At Step SA7, it is determined whether five seconds have passed from non-detection of a touch at Step SA5 described above. If five seconds have not passed, the determination result is "NO", and the processing returns to Step SA5 described above. That is, in the present embodiment, a touch detection is performed only "for five seconds" from the time when the function of the touch panel unit 13 is enabled. Note that the touch detection period is not limited to "five seconds", but may be arbitrarily set by the user at several seconds or the user may select any of a plurality of periods set in advance.

Then, if no touch has been detected during the touch detection period, the determination result at Step SA7 described above is "YES", and the procedure proceeds to Step SA8, where the function of the touch panel unit 13 is disabled, and then makes a transition to an operation of detecting a shake (motion) of the portable terminal 100 by returning the processing to Step SA3 described above.

As such, in the first embodiment, when the acceleration sensor unit 14 with its function enabled in the power saving state detects a shake (motion) of the portable terminal 100, the function of the touch panel unit 13 is enabled, and when the enabled touch panel unit 13 detects a touch operation, a transition is made to the normal operating state where the LCD unit 12 (including the backlight) is set ON for screen display. Therefore, it is not required to press the power supply button provided at a position difficult to operate in view of preventing an erroneous operation as in the conventional technology, and a return can be made from the power saving state to the normal operating state with an extremely simple operation.

### [Second Embodiment]

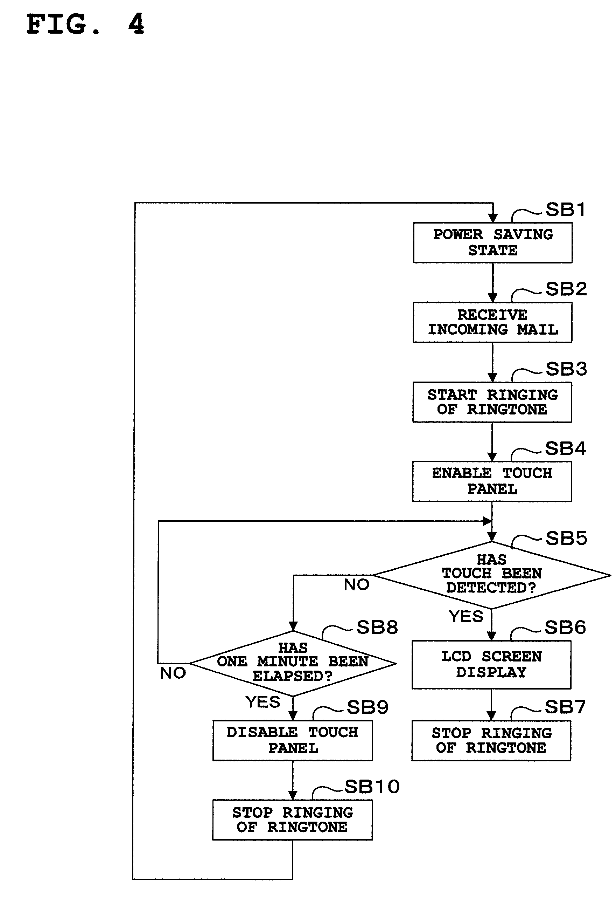

Next, a state control device according to a second embodiment is described. The structure of the second embodiment is identical to that of the first embodiment described above, and therefore is not described herein. In the following, the operation of the state control processing according to the second embodiment is described with reference to FIG. 4.

When the LCD unit 12 (including the backlight) is turned off after a non-operation state continues for a predetermined period and, in the power saving state where the function of the touch panel unit 13 is disabled (Step SB1), reception of an incoming mail is detected (Step SB2), the procedure proceeds to Step SD3, where the ringing of ringtone is started, and then the function of the touch panel unit 13 is enabled.

Then, when the function of the touch panel unit 13 is enabled, the procedure proceeds to Step SB5, where it is determined whether a touch operation has been detected by the touch panel unit 13. If a touch operation has been detected, the determination result is "YES", and the procedure proceeds to Step SB6, where the LCD unit 12 (including the backlight) is set ON for screen display. In the following Step SB7, the ringing of the ringtone is stopped to make a transition to the normal operating state.

On the other hand, if no touch operation has been detected, the determination result at Step SB5 described above is "NO", and the procedure proceeds to Step SB8. At Step SB8, it is determined whether one minute has passed from non-detection of a touch at Step SB5 described above. If one minute has not passed, the determination result is "NO", and the processing returns to Step SB5 described above. That is, in the present embodiment, a touch detection is performed only "for one minute" from the time when the function of the touch panel unit 13 is enabled. Note that the touch detection period is not limited to "one minute", but may be arbitrarily set by the user at several seconds or the user may select any of a plurality of periods set in advance.

Then, if no touch operation has been detected during the touch detection period, the determination result at Step SB8 described above is "YES", and the procedure proceeds to Step SB9, where the function of the touch panel unit 13 is disabled, and then stops ringing of the ringtone at Step SB10 and returns to the power saving state at Step SB1 described above.

As such, in the second embodiment, when an incoming mail is received in the power saving state, ringing of a ringtone is started, and the function of the touch panel unit 13 is enabled. If a touch operation is detected during a touch detection period of "one minute" from the time when the function of the touch panel unit 13 is enabled, the LCD unit 12 (including the backlight) is set ON for screen display, and then ringing of the ringtone is stopped to make a transition to the normal operating state.

On the other hand, if no touch operation has been detected during the touch detection period, the function of the touch panel unit 13 is disabled, and then ringing of the ringtone is stopped to make a return to the power saving state. That is, screen display of the LCD unit 12 is not performed until the user touches the touch panel unit 13. Therefore, as a result of avoiding a conventional harmful effect of wastefully consuming power because of LCD screen display (backlight illumination) although the user is not watching the screen, a return can be made from the power saving state to the normal operating state with an extremely simple operation without wastefully consuming power.

Note that the present invention is not limited to the embodiments described above and can be variously changed within a range of the present invention. For example, the state control device in the present embodiment is not limited to a portable telephone or smartphone including a touch panel, and it goes without saying that the state control device can be applied to electronic devices such as a game device, tablet PC, laptop/notebook PC including a touch panel.

Also, in the above-described embodiments, when a shake (motion) of the casing of the portable terminal 100 is detected by the acceleration sensor unit 14 or an incoming mail is received in the power saving mode, the backlight of the LCD unit 12 is not illuminated, and only the function of the touch panel unit 13 is enabled. The present invention is not limited thereto. For example, in an electronic device having a touch key or a touch sensor on a lower side of the LCD unit 12, specifically, an electronic device in which a touch panel is placed so as to extend beyond a display area of the screen and thereby a touch key or touch sensor is configured, a function assigned to the touch key or touch sensor (for example, stop, replay, fast-forward, or rewind in musical reproduction) may work, and therefore the backlight of the touch key or touch sensor may be illuminated for a predetermined period or a flashing operation may be performed. In this case, note that the backlight of the LCD unit 12 may not be necessarily required to be illuminated.

### [Supplementary Notes]

Next, features of the present invention are described as supplementary notes. Note that the whole or part of the embodiments disclosed above can be described as, but not limited to, the following supplementary notes.

### (Supplementary Note 1)

A state control device comprising:
motion detecting means which detects a motion of a casing;
motion detection enabling means which enables the motion detecting means in a power saving state where a screen display function and a touch panel function are disabled;
touch panel enabling means which enables the touch panel function for a predetermined period when a motion of the casing is detected by the motion detecting means enabled by the motion detection enabling means; and
screen display enabling means which enables the screen display function when a touch operation is detected during a touch detection period in which the touch panel function is enabled by the touch panel enabling means for the predetermined period.

### (Supplementary Note 2)

A state control device comprising:
touch panel enabling means which, when an incoming is detected in a power saving state where a screen display function and a touch panel function are disabled, enables the touch panel function; and
screen display enabling means which enables the screen display function when a touch operation is detected during a touch detection period where the touch panel function is enabled by the touch panel enabling means for a predetermined period.

### (Supplementary Note 3)

The state control device according to Supplementary note 1 or 2, further comprising touch panel disabling means which disables the touch panel function when a touch operation is not detected during the touch detection period where the touch panel function is enabled by the touch panel enabling means for the predetermined period.

### (Supplementary Note 4)

A state control method comprising:
a motion detecting step of detecting a motion of a casing;
a motion detection enabling step of enabling the motion detecting step in a power saving state where a screen display function and a touch panel function are disabled;
a touch panel enabling step of enabling the touch panel function for a predetermined period when a motion of the casing is detected in the motion detecting step enabled by the motion detection enabling step; and
a screen display enabling step of enabling the screen display function when a touch operation is detected during a touch detection period in which the touch panel function is enabled by the touch panel enabling step for the predetermined period.

### (Supplementary Note 5)

A state control method comprising:
a touch panel enabling step of, when an incoming is detected in a power saving state where a screen display function and a touch panel function are disabled, enabling the touch panel function; and
a screen display enabling step of enabling the screen display function when a touch operation is detected during a touch detection period where the touch panel function is enabled by the touch panel enabling step for a predetermined period.

### (Supplementary Note 6)

The state control method according to Supplementary note 4 or 5, further comprising a touch panel disabling step of disabling the touch panel function when a touch operation is not detected during the touch detection period where the touch panel function is enabled by the touch panel enabling step for the predetermined period.

### (Supplementary Note 7)

A program causing a computer mounted on an electronic device to perform steps comprising:
a motion detecting step of detecting a motion of a casing;
a motion detection enabling step of enabling the motion detecting step in a power saving state where a screen display function and a touch panel function are disabled;
a touch panel enabling step of enabling the touch panel function for a predetermined period when a motion of the casing is detected in the motion detecting step enabled by the motion detection enabling step; and
a screen display enabling step of enabling the screen display function when a touch operation is detected during a touch detection period in which the touch panel function is enabled by the touch panel enabling step for the predetermined period.

### (Supplementary Note 8)

A program causing a computer mounted on an electronic device to perform steps comprising:
a touch panel enabling step of, when an incoming is detected in a power saving state where a screen display function and a touch panel function are disabled, enabling the touch panel function; and
a screen display enabling step of enabling the screen display function when a touch operation is detected during a touch detection period where the touch panel function is enabled by the touch panel enabling step for a predetermined period.

### (Supplementary Note 9)

The program according to Supplementary note 7 or 8, further comprising
a touch panel disabling step of disabling the touch panel function when a touch operation is not detected during the touch detection period where the touch panel function is enabled by the touch panel enabling step for the predetermined period.

### DESCRIPTION OF REFERENCE NUMERALS

- 11: power supply button unit
- 12: LCD unit
- 13: touch panel unit
- 14: acceleration sensor unit
- 21: control unit
- 22: CPU
- 23: memory
- 100: portable terminal

## Claims

1. A state control device comprising:
motion detecting means which detects a motion of a casing;
motion detection enabling means which enables the motion detecting means in a power saving state where a screen display function and a touch panel function are disabled;
touch panel enabling means which enables the touch panel function for a predetermined period when a motion of the casing is detected by the motion detecting means enabled by the motion detection enabling means; and
screen display enabling means which enables the screen display function when a touch operation is detected during a touch detection period in which the touch panel function is enabled by the touch panel enabling means for the predetermined period.

2. A state control device comprising:
touch panel enabling means which, when an incoming is detected in a power saving state where a screen display function and a touch panel function are disabled, enables the touch panel function; and
screen display enabling means which enables the screen display function when a touch operation is detected during a touch detection period where the touch panel function is enabled by the touch panel enabling means for a predetermined period.

3. The state control device according to claim 1 or 2, further comprising touch panel disabling means which disables the touch panel function when a touch operation is not detected during the touch detection period where the touch panel function is enabled by the touch panel enabling means for the predetermined period.

4. A state control method comprising:
a motion detecting step of detecting a motion of a casing;
a motion detection enabling step of enabling the motion detecting step in a power saving state where a screen display function and a touch panel function are disabled;
a touch panel enabling step of enabling the touch panel function for a predetermined period when a motion of the casing is detected in the motion detecting step enabled by the motion detection enabling step; and
a screen display enabling step of enabling the screen display function when a touch operation is detected during a touch detection period in which the touch panel function is enabled by the touch panel enabling step for the predetermined period.

5. A state control method comprising:
a touch panel enabling step of, when an incoming is detected in a power saving state where a screen display function and a touch panel function are disabled, enabling the touch panel function; and
a screen display enabling step of enabling the screen display function when a touch operation is detected during a touch detection period where the touch panel function is enabled by the touch panel enabling step for a predetermined period.

6. The state control method according to claim 4 or 5, further comprising a touch panel disabling step of disabling the touch panel function when a touch operation is not detected during the touch detection period where the touch panel function is enabled by the touch panel enabling step for the predetermined period.

7. A program causing a computer mounted on an electronic device to perform steps comprising:
a motion detecting step of detecting a motion of a casing;
a motion detection enabling step of enabling the motion detecting step in a power saving state where a screen display function and a touch panel function are disabled;
a touch panel enabling step of enabling the touch panel function for a predetermined period when a motion of the casing is detected in the motion detecting step enabled by the motion detection enabling step; and
a screen display enabling step of enabling the screen display function when a touch operation is detected during a touch detection period in which the touch panel function is enabled by the touch panel enabling step for the predetermined period.

8. A program causing a computer mounted on an electronic device to perform steps comprising:
a touch panel enabling step of, when an incoming is detected in a power saving state where a screen display function and a touch panel function are disabled, enabling the touch panel function; and
a screen display enabling step of enabling the screen display function when a touch operation is detected during a touch detection period where the touch panel function is enabled by the touch panel enabling step for a predetermined period.

9. The program according to Supplementary notes 7 or 8, further comprising:
a touch panel disabling step of disabling the touch panel function when a touch operation is not detected during the touch detection period where the touch panel function is enabled by the touch panel enabling step for the predetermined period.
